# EUROPÄISCHE PATENTSCHRIFT

(11) **EP 4 105 612 B1**
(45) Veröffentlichungstag und Bekanntmachung des Hinweises auf die Patenterteilung: **09.04.2025**
(21) Anmeldenummer: 21180026.3
(22) Anmeldetag: 17.06.2021
(51) Int. Cl.: G01F 1/667, G01F 1/74, G01F 23/296, G01N 29/07, G01F 1/66, G01N 29/04

(54) **SYSTEM ZUR ÜBERWACHUNG VON BEHÄLTERN ODER LEITUNGEN IN DENEN MINDESTENS ZWEI PHASEN ODER MINDESTENS ZWEI MEDIEN EINER PHASE IN FORM EINER FLÜSSIGKEIT, EINES GASES UND/ODER EINES FESTSTOFFS GEMEINSAM GELAGERT ODER TRANSPORTIERT WERDEN**
SYSTEM FOR MONITORING CONTAINERS OR CONDUITS IN WHICH AT LEAST TWO PHASES OR AT LEAST TWO MEDIA OF A PHASE IN THE FORM OF A LIQUID, A GAS AND / OR A SOLID STORED OR TRANSPORTED TOGETHER
SYSTÈME DE SURVEILLANCE DES RÉCIPIENTS OU DES CONDUITES DANS LESQUELS AU MOINS DEUX PHASES OU AU MOINS DEUX MILIEUX D'UNE PHASE SOUS FORME DE LIQUIDE, DE GAZ ET/OU DE SOLIDE SONT STOCKÉS OU TRANSPORTÉS ENSEMBLE

(43) Veröffentlichungstag der Anmeldung: 21.12.2022
(73) Patentinhaber: Fraunhofer-Gesellschaft zur Förderung der angewandten Forschung e.V., 80686 München (DE)
(72) Erfinder: Lieske, Uwe, 01109 Dresden (DE); Schubert, Lars, 01109 Dresden (DE); Weihnacht, Bianca, 01109 Dresden (DE); Neubeck, Robert, 01109 Dresden (DE); Gaul, Tobias, 01109 Dresden (DE); Klesse, Thomas, 01109 Dresden (DE)
(74) Vertreter: Pfenning, Meinig & Partner mbB

(56) Entgegenhaltungen:
- EP-A1- 0 935 798
- EP-B1- 0 935 798
- RO-A0- 131 152
- US-A- 3 552 191
- US-A1- 2011 271 769
- US-A1- 2014 137 662
- ZHANG SAINAN ET AL: "Electromechanical Impedance Based Damage Assessment Approach for Metal-nonmetal Complex Structure", 2019 CHINESE CONTROL AND DECISION CONFERENCE (CCDC), IEEE, 3 June 2019 (2019-06-03), pages 3185 - 3189, XP033614378, DOI: 10.1109/CCDC.2019.8832397

## Beschreibung

Die Erfindung betrifft ein System zur Überwachung von Behältern oder Leitungen in denen mindestens zwei Phasen oder mindestens zwei Medien einer Phase in Form einer Flüssigkeit, eines Gases und/oder eines Feststoffs gemeinsam gelagert oder transportiert werden.

Dabei kann es sich insbesondere um Öl, Gas, Wasser-und darin mitgeführte bzw. enthaltene Feststoffpartikel handeln. Bei zwei Medien einer Phase, beispielsweise zwei Flüssigkeiten sollten diese eine unterschiedliche physikalische Dichte aufweisen.

Für verschiedene technische Anwendungen ist es notwendig, Behälter (vertikal oder horizontal ausgerichtet) oder auch Rohrleitungen auf ihre Integrität zu prüfen, um die Sicherheit zu gewährleisten. Besonders stark beanspruchte Teile einer Anlage, wie z. B. Schweißnähte oder Bögen müssen daher regelmäßig auf Risse überprüft werden, was eine große Herausforderung darstellt.

Wandstärken spielen für Behälter und Rohre in korrosiven Umgebungen eine große Rolle. Es gibt flächenhafte und lokale Korrosion (z. B. Lochfraß). Beide erfordern in der Regel unterschiedliche Systeme zur Detektion. Aber auch in der Öl- und Gas-Industrie werden Bögen durch das im Rohöl befindliche Sediment stark belastet, was zu Wanddickenabtrag führt.

Weiterhin ist für verschiedene Prozesse die Kenntnis von Füllständen in Behältern von großem Nutzen, um die Prozesse im optimalen Bereich fahren zu können und Systemausfälle oder Havarien zu verhindern. Beispielhaft seien für diese Anwendung hier Separatoren in der Öl- und Gasindustrie genannt, die die verschiedenen Phasen (fest, flüssig, gasförmig) gravitativ voneinander trennen.

Insbesondere Rohöl enthält alle drei Phasen. Durch ein Blech in der Mitte eines Behälters werden Sedimente und Wasser zurückgehalten. Das Öl, als leichtere Phase, überwindet die Barriere und kann dann separat abgeführt werden. Das Gas steigt auf und wird im oberen Bereich gesammelt. Steigt nun das Niveau der Sedimente so weit an, dass diese die Barriere überwinden können, gelangen sie wieder in das nun gereinigte Öl. Der Prozess muss unterbrochen und der Tank aufwändig gereinigt werden. Daher sind Betreiber von derartigen Separatoren bestrebt, diesen Fall auszuschließen. Die Zuströme an Rohöl enthalten allerdings unterschiedliche Anteile der verschiedenen Phasen, so dass sich eine zeitliche Begrenzung nicht eignet.

Besonders im Kontext von Öl- und Gas-Separatoren wird eine Vielzahl an Messtechniken eingesetzt, um die Mächtigkeiten der verschiedenen Phasen zu bestimmen. Für eine Unterscheidung zwischen Gas- und Flüssig-Phase sowie unterschiedlicher Flüssig-Phasen haben sich Schwimmkörper, Drucksensoren, Ultraschall Pulse-Echo-Anordnungen, elektromagnetische Radarverfahren, elektrische Kapazitätsverfahren und radiometrische Verfahren bewährt.

Währenddessen ist der Übergang von festen und flüssigen Phasen für die meisten Sensoren nicht, oder nur unter bestimmten Bedingungen nachweisbar. Außerdem ist ihre zusätzliche Fähigkeit zur Auflösung von Defekten begrenzt. Schwimmkörper und Drucksensoren versagen hierbei aufgrund ihrer Wirkprinzipien. Weiterhin müssen sich diese Sensortypen im Inneren des Separators oder in speziellen Bypässen befinden, welche konstruktive Änderungen an bestehenden Systemen erfordern. Eine Erfassung von potenziell entstehenden Defekten vor Versagen der Behälterwand ist ebenfalls nicht möglich.

Ultraschall-Pulse-Echo-Anordnungen werden üblicherweise im Inneren des Behälters angebracht und nehmen die Laufzeiten der Reflexionen an den Phasenübergängen auf. Problematisch sind dabei niedrige Kontrastunterschiede zwischen diversen Flüssig-Phasen sowie eine Emulsion- oder Schaumbildung an den Phasengrenzen. Diese resultieren in einer hohen Streuung der Ultraschallwellen, welche die Amplituden der Reflexionen bis unterhalb der Signal-Rauschschwelle dämpfen. Weiterhin bedingen die Größenordnungen der meisten Behälter und den damit einhergehenden langen Laufwegen der Ultraschallwellen eine hohe Dämpfung, so dass sich solche Systeme für die Überwachung von Fest-Phasen aufnehmenden Behältern bisher nicht durchgesetzt haben.

Konventionelle Ultraschall- oder Phased-Array Systeme sind zwar neben visueller Prüfung ebenfalls einer der Standards in der zerstörungsfreien Prüfung von Behältern, jedoch handelt es sich hierbei um unterschiedliche Systeme aufgrund der genutzten Anregungsfrequenzen und optimierten Abstrahlcharakteristik. Zusätzlich sind solche Prüfungen zeitintensiv und benötigen speziell ausgebildetes Personal, welches erst nach Entfernung einer potenziellen Isolierung sowie Stilllegung des Behälters den Prüfbereich vermessen kann.

Radarverfahren nutzen hingegen elektromagnetische Wellen im Gigahertz-Spektrum und messen den Kontrast der relativen dielektrischen Permittivität, welche stabil gegenüber gängigen Temperaturänderungen und anderen Prozessgrößen ist. Das Messsystem ist ebenfalls auf der Innenseite eines Behältnisses anzubringen und funktioniert entweder ähnlich der Ultraschall Messungen als kontaktloses Pulse-Echo-Verfahren oder als geführtes Radar mittels einer zusätzlichen Antenne, welche in Kontakt mit der Füllung stehen muss. Letzteres hat in der Praxis seine Fähigkeit gezeigt, auch Flüssig-Fest Grenzen aufzulösen, vorausgesetzt, die Antenne überschreitet nicht eine gewisse Länge und ist frei von prozesstypischen Feststoffablagerungen wie Schluff, Ton oder Wachs.

Elektrische Kapazitätstomographie basiert auf kontaktloser Messung der relativen dielektrischen Permittivität mittels mehrerer Kapazitätssonden. Jedoch müssen diese bei typischen metallischen und damit elektrisch leitfähigen Behältern, mit Wandstärken im Zentimeterbereich auf der Innenwand angebracht und mittels einer zusätzlichen Kunststoffschicht isoliert werden. Der daraus resultierende hohe konstruktive Aufwand und die Anfälligkeit der Isolierung unter den üblichen abrasiven Prozessbedingungen haben einen kommerziellen Erfolg im Bereich der Öl- und Gas Separatoren bisher verhindert. Weiterhin kann eine ringförmige Anordnung der Sensoren nicht ohne eine hohe Anzahl zusätzlicher Sensoren auf vertikale Separatoren übertragen werden.

Verfahren, bei denen die Sensoren außerhalb eines Behälters angeordnet werden, alle drei Phasenübergänge erfassen können und potenziell für die Detektion von Schadenswachstum an Behälterwänden in Frage kommen, sind aktive radiometrische Messungen mittels Gamma-Strahlenquellen und aktiv angeregten geführten elastischen Wellen (GEW). Gamma-Messungen sind ein in der Industrie ein etabliertes Verfahren. Dabei werden mittels angepasster aktiver Gamma-Strahlenquellen die Behälter samt Inhalt mit vernachlässigbarer Streuung durchstrahlt und die örtlich aufgelöste Energiedichte mittels Detektoren hinter dem Behälter aufgezeichnet. Durch die nötigen Strahlungsquellen bei großen Behältern und mit Wandstärken im Zentimeterbereich ist in der Regel ein hohes Maß an Strahlenschutzauflagen an die Verwendung gebunden, besonders wenn im kontinuierlichen Betrieb der Füllstand erfasst werden soll. Weiterhin sind die Strahlungsquellen nicht abschaltbar, sondern müssen mechanisch abgeschirmt werden. Dieser Umstand ist besonders für die Havarie-Sicherheit relevant.

Geführte elastische Wellen (GEW) bilden sich aus der Überlagerung von konventionellen elastischen Raumwellen in Anwesenheit mindestens einer nahezu spannungsfreien Oberfläche. In der Literatur werden sie dabei auch als geführte Ultraschallwellen (GUW) oder Acousto Ultrasonics (AU) bezeichnet. Im Vergleich zu Raumwellen besitzen sie eine geringere geometrische Dämpfung und ein damit einhergehendes hohes Potenzial zur Überwachung über längere Distanzen und bei größeren Strukturen. Die Anregung und Messung erfolgt dabei generell mittels (z. B. piezokeramischer) Aktoren, welche besonders im Kontext der Zustandsüberwachung ein an die Struktur appliziertes Netzwerk bilden.

US2014/137662A1 bezieht sich auf ein akustisches Durchflussmessgerät, bei dem Lamb-Wellen erzeugt und zur Messung der Wandstärke verwendet werden.

Für diese Anordnung ergibt sich eine Vielzahl an Anwendungen, wie Riss und Schadensdetektion, Wanddicken bzw. Korrosionsüberwachung oder die Messung von Füllständen. Im Kontext der Strukturüberwachung mittels GEW bzw. GUW kommt auch die Messung der elektromechanischen Impedanz zur Integritätsprüfung des Sensornetzwerkes zum Einsatz. Im Speziellen hat sich gezeigt, dass die robuste zentimetergenaue Erfassung aller möglichen Phasengrenzen durch ein linien- bzw. ringartiges Netzwerk mit Sensorabständen von mehreren Dezimetern möglich ist, wenn ein Ansatz der Dämpfungstomographie genutzt wird. Andere, bereits patentierte Ansätze zur Füllstandsbestimmung mittels GEW bzw. GUW konnten sich bisher nicht durchsetzen, da diese entweder auf der Laufzeitmessung von konvertierten Raumwellen oder einer Eigenfrequenzmessung basieren. Für die Laufzeitmessungen müssen die Raumwellen nach dem Passieren der zu erfassenden Phase notwendigerweise gemessen werden, was durch die hohe Dämpfung des Mediums bzw. die langen Laufwege bei großen Behältern nicht gegeben ist. Die Eigenfrequenzen hingegen erfordern einen hohen Aufwand an Kalibriermessungen für mehrphasige oder komplexe Füllungen und eine damit einhergehende Instabilität gegenüber unerwarteten Änderungen des Systems.

RO131152A0 bezieht sich auf ein System zur Identifizierung von Fehlern mechanischer Herkunft in metallischen oder Verbundstrukturen mittels eines elektromechanischen Impedanzanalysators.

Bisher wurde die Vielzahl an Nutzungsmöglichkeiten der GEW bzw. GUW dokumentiert, aber nicht in einem einzigen System kombiniert:
- Schadens- und Rissdetektion
- Korrosions- und Wanddickenmessung
- Füllstandsmessung mittels Dämpfungstomographie
- Nachweis der korrekten Funktion von Aktor und Sensor mittels Impedanzmessung

Die Anforderungen für das Prüfsystem kann man wie folgt definieren:
Das System soll bevorzugt für zylindrische Druckbehälter in horizontaler oder vertikaler Anordnung sowie Rohrleitungen anwendbar sein.

Es soll eine variable Größe des Prüfobjektes in Länge, Umfang und Wanddicke berücksichtigen können.

Die Anordnung der Sensoren in Umfangsrichtung oder in axialer Richtung soll möglich sein, wobei auch eine netzartige Anordnung möglich sein kann.

Es sollten ein variabler Sensorabstand und eine variable Anzahl an Sensoren möglich sein.

Eine Einsatztemperatur bis 120° C sollte möglich sein.

Das System sollte wasser- und staubdicht, sowie sxplosionsschutzfähig sein, so dass auch ein Einsatz in einer Offshore-Umgebung möglich ist. Außerdem sollte das System korrosionsbeständig ausgebildet sein können.

Außerdem soll kein Anschweißen oder Ankleben von Sensoren oder Wellenleitern direkt am jeweiligen Prüfobjekt erforderlich sein. Prüfobjekte sollten nicht zwangsläufig aus ferromagnetischem Material bestehen müssen, so dass auch Behälter oder Leitungen, die mit Verbundwerkstoffen oder aus nichtferromagnetischen Materialien hergestellt sind, berücksichtigt werden können.

Es sollte möglichst auch eine "trockene" Ankopplung der Sensoren (keine flüchtigen Substanzen, wartungsfrei), eine Austauschbarkeit einzelner Sensoren möglich, eine einfache Installation, die von allgemeinem Montagepersonal durchführbar ist, sowie ein Betrieb innerhalb einer thermischen Isolation des Prüfobjektes möglich sein.

Es ist daher insbesondere Aufgabe der Erfindung, Möglichkeiten für eine umfangreiche Prüfung und Überwachung an in Rede stehenden Behältern oder Leitungen durchzuführen und dabei flexibel vorgehen zu können, ohne dass eine dauerhafte Befestigung an einem jeweiligen Behälter oder einer jeweiligen Leitung erforderlich ist, und Veränderungen an deren Wandung zur Befestigung und für eine Überwachung erforderlich sind.

Erfindungsgemäß wird diese Aufgabe mit einem System, das die Merkmale des Anspruchs 1 aufweist, gelöst. Vorteilhafte Ausgestaltungen und Weiterbildungen der Erfindung können mit in abhängigen Ansprüchen bezeichneten Merkmalen realisiert werden.

Das erfindungsgemäße System ist mit mehreren entlang einer Achse in einer Reihenanordnung oder in einer Ebene um einen Behälter oder eine Leitung herum mit bekannten Abständen zueinander angeordneten Prüfköpfen gebildet. Die Prüfköpfe sind an dem jeweiligen Behälter oder der jeweiligen Leitung befestigbar und über eine Datenleitung zur Übertragung von Mess- und Steuersignalen und zur Stromversorgung mit einer elektronischen Auswerte- und Steuereinheit verbunden.

Dabei sind die Prüfköpfe jeweils mit mindestens einem elastischen Wellen emittierenden und mindestens einem elastischen Wellen detektierenden oder mindestens einem elastischen Wellen emittierenden und detektierenden Element gebildet, wobei die elastischen Wellen emittierenden Elemente so angeordnet und ausgebildet sind, geführte elastische Wellen in eine Wandung des jeweiligen Behälters oder der jeweiligen Leitung einzukoppeln.

Die elektronische Auswerte- und Steuereinheit ist so ausgebildet, dass mit Messsignalen der elastischen Wellen detektierenden Elemente eine Schadens- und Rissdetektion, eine Korrosions- und Wanddickenbestimmung, eine Füllstandsmessung und eine Funktionsüberprüfung der Prüfköpfe durchgeführt werden kann, sowie die elastischen Wellen emittierenden Elemente angesteuert werden.

Außerdem sind die Prüfköpfe mittels Halterungselementen und einer Spannvorrichtung am jeweiligen Behälter oder der jeweiligen Leitung an einer Außenwand befestigbar. Die Spannvorrichtung kann dazu mit mindestens einem Spannband gebildet sein.

Prüfköpfe können aber auch in einer Reihen- und Spaltenanordnung angeordnet sein und ein Array bilden.

Die Prüfköpfe können im jeweiligen Halteelement mit einer Druckkraft, die in Richtung der jeweiligen Außenwand wirkt, beaufschlagt werden, so dass die elastischen Wellen emittierenden und/oder Wellen detektierenden Elemente direkt an der Außenwand oder über eine Koppelschicht, die an der Außenwand anliegt, anliegen. Dies kann mit einer Druckfeder realisiert werden, die in der Halterung angeordnet ist und sich dort zumindest an der Seite, die der Seite gegenüberliegt, an der ein Prüfkopf angeordnet wird, abstützt.

An den Halteelementen kann jeweils mindestens ein zylinderförmiges Element befestigt sein, an dem die Spannvorrichtung angreift und mit dem eine in Richtung Außenwand wirkende Druckkraft auf das Halteelement wirkt. Bevorzugt sind jedoch zwei zylinderförmige Elemente, die an zwei sich gegenüberliegenden Seiten eines Haltelements angeordnet sind, so dass eine symmetrische Kraftwirkung am Halteelement erreicht werden kann. Die zylinderförmigen Elemente sollten parallel zur Oberfläche der jeweiligen Außenwand ausgerichtet sein.

Günstig ist es auch, in den Prüfköpfen jeweils einen Vorverstärker für Messsignale zu integrieren, so dass die erfassten Messsignale verstärkt zur elektronischen Auswerte- und Steuereinheit übertragen werden können, so dass auch größere Wege bei der Messsignalübertragung problemlos sind.

Erfindungsgemäß ist die elektronische Auswerte- und Steuereinheit ausgebildet, eine elektromechanische Impedanzspektroskopie durchzuführen. Die elektronische Auswerte- und Steuereinheit ist auch so ausgebildet, dass zur Bestimmung einer Impedanz eine sequenzielle Übertragung und Auswertung der mit den elastischen Wellen detektierenden Elementen bestimmten elektrischen Spannung und des elektrischen Stroms durchgeführt werden kann.

Prüfköpfe können in einer Reihen-, oder einer Reihen- und Spaltenanordnung angeordnet sein.

Es können auch mehrere Systeme an einem Behälter oder einer Leitung vorhanden sein, die miteinander verbindbar sind.

Prüfkopfe können mit einem Polymer, insbesondere mit einem Harz vergossen ausgeführt sein. Dadurch kann der Explosionsschutz verbessert werden.

Ausgehend von den zuvor genannten Anforderungen wird ein Prüfsystem, basierend auf geführten elastischen Wellen, adressiert, das mit einer verteilten Anordnung von Aktoren und Sensoren den Füllstand von Behältern oder Leitungen überwachen kann. Dabei stellen die Umgebungsbedingungen im Bereich Öl und Gas spezielle Anforderungen an die Entwicklung.

Um eine einfache Nachrüstung des Systems an bestehenden Anlagen und die Austauschbarkeit zu gewährleisten ist das System so ausgebildet, dass Prüfköpfe mit Halteelementen je nach Art und Installation von Behältern oder Leitungen flexibel anpassbar mit den Halteelementen für die jeweiligen Prüfköpfe befestigt werden kann.

Die Haltelemente erfüllen dabei die Aufgabe Prüfköpfe mit Aktorik, Sensorik und Elektronik an dem jeweiligen Behälter oder der Leitung mittels Spannband zu fixieren. An den Halteelementen ist jedoch keine Elektronik vorhanden und unterliegt keinen gesonderten Anforderungen an den Explosionsschutz.

Halteelemente können ein Gehäuse aufweisen, an dem Hohlräume und Durchbrechungen vorhanden sind, in denen Prüfköpfe aufgenommen und in das Gehäuse eingeführt werden können. Sie sollten aus einem korrosionsbeständigen Material bestehen, das eine ausreichende Festigkeit aufweist.

Im Gehäuse kann ein Stellring als mechanische Aufnahme für den eigentlichen Prüfkopf befestigt und beweglich geführt sein, so dass der Stellring, an dem ein Prüfkopf befestigt werden kann, eine translatorische Bewegung eines im Halteelement befestigten Prüfkopfes senkrecht bzw. in Richtung des Normalenvektors zur Außenwand des jeweiligen Behälters oder der Leitung ermöglicht. Der Stellring kann dazu in einer Führung beweglich gelagert sein. Mit einer Druckfeder, die ebenfalls im Gehäuse gehalten ist, kann so der Prüfkopf mit einer entsprechenden konstanten Druckkraft beaufschlagt werden, die in Richtung Außenwand wirkt.

Am Gehäuse können auch Magnete (permanent oder elektrisch) befestigt sein, die als Installationshilfe bei Strukturen aus ferromagnetischem Material genutzt werden können. Bei Strukturen aus nicht-ferromagnetischem Material können die Magnete durch einfache Abstandshalter oder Widerlager ersetzt werden.

Die Befestigung des jeweiligen Halteelements am jeweiligen Behälter bzw. Leitung kann mittels Spannband erfolgen. Das Spannband kann dabei über zylinderförmige Elemente geführt sein und sichert eine dauerhafte Befestigung am Behälter bzw. der Leitung, zumindest solange, wie dies gewünscht ist. Durch die zylinderförmigen Elemente werden beim Spannen keine Scherkräfte auf das Gehäuse übertragen und es kann so ein Verrutschen verhindert werden. Mit einem Spannverschlusssystem kann eine gleichbleibende Vorspannung über die Einsatzdauer des Systems sichergestellt werden. Dazu können an sich bekannte Spannverschlusssysteme zum Einsatz kommen.

Ein Prüfkopf sollte alle funktionellen Komponenten für eine Emission und eine Detektion von elastischen Wellen aufweisen. Er kann als Zylinder aus einem korrosionsbeständigen Material ausgeführt sein. Mit einem Außengewinde kann der Prüfkopf in den Stellring geschraubt werden. Dieser Stellring befindet sich während der Montage zunächst in einer neutralen Position, d.h. der Prüfkopf hat keinen Kontakt zu einer Außenwand eines Behälters bzw. einer Leitung. Nach der Installation des Prüfkopfes im Stellring kann die Anordnung in einer Führung so bewegt werden, dass die Druckfeder den Prüfkopf mit einer konstanten Druckkraft an die jeweilige Außenwand drückt, wenn das Spannband gespannt worden ist.

Jeder Prüfkopf sollte so ausgeführt sein, dass er über einen (z. B. piezoelektrischen) Aktor als Wellen emittierendes Element elastische Wellen bzw. geführte elastische Wellen in den jeweiligen Behälter bzw. die Leitung einkoppeln kann und diese über einen Sensor als Wellen detektierendes Element wieder empfangen kann. Das Senden und Empfangen ist durch die direkte Anpressung des Prüfkopfes (Metallhülse) auf die Außenwand möglich. Zur Verbesserung der Ein- und Auskopplung der geführten elastischen Wellen kann eine wartungsfreie Koppelschicht aus einem elastischen Material zwischen Außenwand und Prüfkopf angeordnet sein. Die Koppelschicht kann dabei während der Herstellung fest mit dem Prüfkopf verbunden worden sein. Der Verbund aus Wellen emittierenden und detektierenden Element steht dabei im Prüfkopf unter permanentem mechanischem Druck. Der gesamte Prüfkopf kann mit einem Harzsystem vergossen sein, das für den Explosionsschutz zertifiziert ist. Eine Funkenbildung innerhalb des Prüfkopfes ist damit ausgeschlossen. Ein Prüfkopf kann hermetisch dicht und somit gegen Eindringen von Wasser und Staub geschützt sein.

Zur Bildung eines Netzwerkes können mehrere Prüfköpfe über ein Bussystem seriell untereinander verbunden und an die elektronische Auswerte- und Steuereinheit angeschlossen sein. Abhängig von der Orientierung kann dabei eine horizontale oder vertikale Reihenanordnung auf der jeweiligen Außenwand eingehalten werden. Die Datenleitung für das Bussystem, die die Prüfköpfe untereinander verbindet, kann in der Länge variabel und zusätzlich in einem Metallschutzschlauch geführt werden, um einen möglichen Ex-Schutz des Systems zu gewährleisten. Die Energieversorgung und Datenleitung sind über ein Bussystem realisierbar.

Ein elektronischer Vorverstärker, der in einen Prüfkopf integriert ist, kann die Messsignale verstärken und ermöglicht zum anderen die Selektion des jeweiligen Messkanals innerhalb der Messkette. Jeder Prüfkopf verfügt über ein Wellen emittierendes und ein Wellen detektierendes Element. Diese können als unterschiedliche Elemente oder auch als ein Element ausgeführt sein, das beide Funktionen vereint. Gleichzeitig kann zur Überprüfung der Funktionsfähigkeit ein Selbsttest der Funktionalität eines Prüfkopfes durchgeführt werden. Dabei ermöglicht der Vorverstärker auch die Durchführung einer Impedanzspektroskopie, wobei gleichzeitig nur ein Element mit einer Kleinstspannung betrieben wird.

Im Gegensatz zur üblichen Impedanzmessung, bei der elektrischer Strom und elektrische Spannung gleichzeitig (parallel) gemessen werden, können bei der Schaltung elektrischer Strom und elektrische Spannung zeitlich sequenziell ermittelt werden. Jeweilige Wellen emittierende Elemente und Wellen detektierende Elemente können durch Zu- und Abschalten getrennt gemessen werden. Dadurch kann der gleiche Messkanal im Bussystem für beide Messgrößen genutzt werden. Es sind keine zusätzlichen Datenleitungen notwendig.

Die Komponenten Wellen emittierender und detektierender Elemente und die Leiterplatte sowie die Gehäusekomponenten sollten so ausgeführt sein, dass einer dauerhaften Betriebstemperatur von 120°C ohne Beschädigung von Elementen Stand gehalten werden kann.

Durch die Aneinanderreihung der im vorherigen Abschnitt beschriebenen Prüfköpfe mit frei wählbarem Abstand von Prüfköpfen können bis zu vier Anwendungsmöglichkeiten mit unterschiedlichen Aussagen erschlossen werden:
- Bewertung der Funktionsfähigkeit der Wellen emittierenden und detektierenden Elemente mittels Messung der elektromechanischen Impedanz
- Messung der Füllstandshöhen im Behälter oder einer Leitung und Erfassung der Phasengrenzen fest-flüssig, flüssig-flüssig (bspw. Öl und Wasser) und/oder flüssig-gasförmig durch die Anwendung geführter Wellen und einen Dämpfungstomographischen Ansatz
- Ermittlung der Wanddicke entlang der Reihenanordnung durch die Anwendung geführter Wellen
- Detektion von makroskopischen Rissen und lokaler Korrosion durch die Anwendung geführter Wellen

Mit der integrierten Messung der elektromechanischen Impedanz kann der Nachweis der Funktionsfähigkeit der in Vergussmasse eingebetteten elastischen Wellen emittierenden und detektierenden Elemente geführt werden. Dabei kann ausgenutzt werden, dass die Impedanz z. B. einer piezoelektrischen Keramik neben den piezoelektrischen Konstanten auch von der Umgebungsrandbedingung beeinflusst werden kann. Im Impedanzspektrum treten Amplituden- und Phasenänderungen auf, wenn die beispielsweise eingesetzte piezoelektrische Keramik durch Abplatzungen oder Risse mechanisch geschädigt wurde oder der elektrische Kontakt zur Elektrode unterbrochen ist. Des Weiteren können Veränderungen, wie die Enthaftung der Koppelschicht oder die thermische Zersetzung der umgebenen Vergussmasse innerhalb des Prüfkopfes nachgewiesen werden. Diese Effekte dominieren, da in diesem Fall durch Nutzung eines Niedrigenergiesignals die Eindringtiefe in die Behälter- oder Leitungswand vernachlässigbar ist.

Zur Bestimmung der Füllhöhe werden sequenziell zwischen allen oder wahlweise nur ausgewählten Paarungen aus Wellen emittierenden und detektierenden Elementen entlang der Anordnung dieser Elemente geführte elastische Wellen emittiert und detektiert. Während sich die Wellen in der Wandung eines Behälters oder einer Leitung ausbreiten, werden sie im Falle der Anwesenheit eines Mediums mit Kontakt zur Wand über viskoelastische Effekte in viskoelastische Raumwellen oder Oberflächenwellen konvertiert. Messbar ist dieser Effekt als scheinbare Dämpfung der ursprünglichen geführten Wellen. Diese kann entlang der Anordnung von Prüfköpfen ausgewertet werden und ermöglicht die Bestimmung der Lage von Phasenübergangen zwischen fest-flüssig, flüssig-gasförmig, sowie flüssig-flüssig Grenzen im Falle eines ausreichend viskoelastischen Kontrastes. Zur Erhöhung der Genauigkeit sowie Reduzierung des Einflusses von strukturellen Besonderheiten ist eine Leermessung oder Referenzmessung mit leerem Behälter oder Leitung optional möglich bzw. empfehlenswert.

Eine weitere Messmöglichkeit dient zur Bestimmung des kontinuierlichen Wandabtrags durch flächenhafte Korrosion. Dabei kann die Abhängigkeit der Phasengeschwindigkeit zur Wandstärke von geführten elastischen Wellen ausgenutzt werden. Bei einer konstanten Anregungsfrequenz besitzt eine geführte elastische Welle abhängig von der Wandstärke einer Wandung unterschiedliche Geschwindigkeiten. Daher basiert die Messung des Wandabtrags auf einer Laufzeitmessung bzw. der Messung der Phasenverschiebung zwischen den Wellen emittierenden und detektierenden Elementen eines Systems. Die Auswertung kann integral zwischen einem Paar Wellen emittierender und detektierender Elemente oder über einen tomographischen Ansatz erfolgen.

Neben einem globalen Wandabtrag können auch lokale Änderungen, wie makroskopische Risse und örtlich begrenzte Korrosion an bzw. in einer Wandung detektiert werden. Dies kann innerhalb einer Prüfkopfanordnung eines Systems oder zwischen mindestens zwei auf der Außenwand verteilt angeordneten Reihenanordnungen von Prüfköpfen erreicht werden. Mit dem System kann sequenziell von den Wellen emittierenden Elementen eine geführte elastische Welle in der jeweiligen Wandung angeregt und mit den detektierenden Elementen wieder erfasst werden. An lokalen Veränderungen entsteht dabei mit geführten elastischen Wellen ein Streufeld, das vom System erfasst und bewertet werden kann. Eine anschließende Auswertung mit tomographischen Algorithmen ermöglicht die Rekonstruktion der Position und Größe der lokalen Änderung.

Alle Messprinzipien bzw. Anwendungen können dabei generell von einer Referenzmessung zur Systemkalibrierung profitieren. Sind weitere schwankende Prozessparameter zu erwarten, welche signifikant die Ausbreitung der geführten Wellen beeinflussen (bspw. Temperaturänderungen oder mechanische Prozessgeräusche im Sende-Empfangsspektrum), so sollte eine Referenzmessung zusätzlich über diesen zu erwartenden Beobachtungsraum erweitert werden. Daraus berechenbare Korrekturfunktionale reduzieren im Nachgang wiederum den Einfluss solcher Prozessparameter in der Messsignalverarbeitung.

Mit der Erfindung ist ein nicht-invasiver Einsatz möglich, da wesentliche Komponenten von außen an einen Behälter oder eine Leitung angebracht werden können. Durch das Anbringungskonzept können die Prüfköpfe leicht ausgewechselt werden, was die Instanthaltung vereinfacht. Es können auch schwankende Füllstände zuverlässig in kleinen Intervallen detektiert werden. Das System ist für den explosionsgefährdeten Bereich geeignet. Es ist ebenfalls nur eine partielle Entfernung der Isolation (Streifen um den Umfang) notwendig. Es eignet sich auch für andere Geometrien (z. B. vertikale Separatoren). Die Installation kann ohne Prüfköpfe erfolgen. Diese können nach der Befestigung von Halteelementen nur in die Halteelemente eingeklickt oder eingeschraubt werden und können so nicht während der Montage der Halteelemente beschädigt werden. Dies ist insbesondere für die Arbeit in harscher Umgebung (z. B. Ölplattform) vorteilhaft. Das System ist modular und durch wählbare Anzahl der Prüfköpfe skalierbar (bzgl. Genauigkeit und Geometrie/Größe des Messobjektes).

Die Erfindung kann in der Öl&Gas-Industrie, der chemischen Industrie, in Kraftwerken, an Abwasserbehältern, in Raffinerien inkl. Tankstellen, an Wasserstofftanks, an Rohrleitungen also eigentlich allen Anwendungen mit befüllten Behältern oder Rohrleitungen eingesetzt werden.

Nachfolgend soll die Erfindung beispielhaft näher erläutert werden.

Dabei zeigen:
Figur 1 einen Behälter mit horizontaler Ausrichtung seiner mittleren Längsachse mit daran befestigten Prüfköpfen;
Figur 2 einen Behälter mit vertikaler Ausrichtung seiner mittleren Längsachse mit daran befestigten Prüfköpfen;
Figur 3 einen in einem Haltelement fixierten Prüfkopf;
Figur 4 eine Schnittdarstellung durch ein Beispiel eines Halteelements; und
Figur 5 eine Schnittdarstellung durch ein Beispiel eines Prüfkopfes.

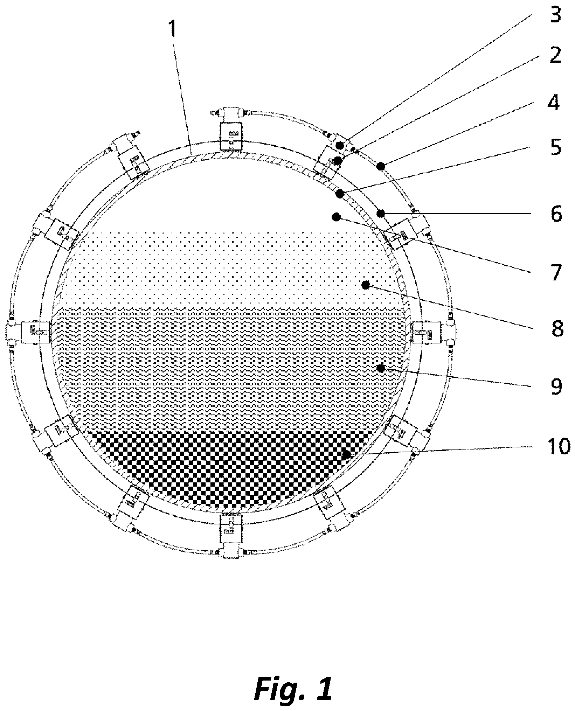

Bei dem in Figur 1 gezeigten Beispiel sind über den Umfang in einer Ebene verteilt an der Außenwand 5 des Behälters 1 Haltelemente 2 in denen jeweils ein Prüfkopf 3 gehalten ist mit einem Spannband als Spannvorrichtung 6 befestigt.

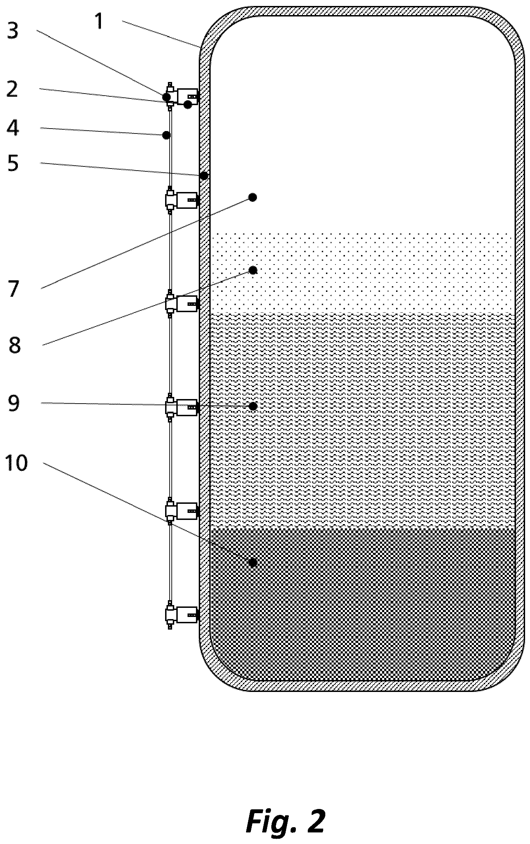

Bei dem in Figur 2 gezeigten Beispiel sind die Halteelemente 2 mit Prüfköpfen 3 in einer Reihenanordnung mit vertikaler Ausrichtung fixiert.

In den Behältern 1 sind eine Feststoffphase 10, Wasser als eine Flüssigkeit 9, Öl als eine weitere Flüssigkeit 8 und ein Gas 7 mit entsprechender Anordnung von unten nach oben enthalten.

Die Prüfköpfe 3 sind mit einer Energieversorgungs- und Datenleitung 4, die als BUS-Verbindung ausgebildet sein sollte miteinander und mit einer nicht gezeigten elektronischen Steuereinheit verbunden.

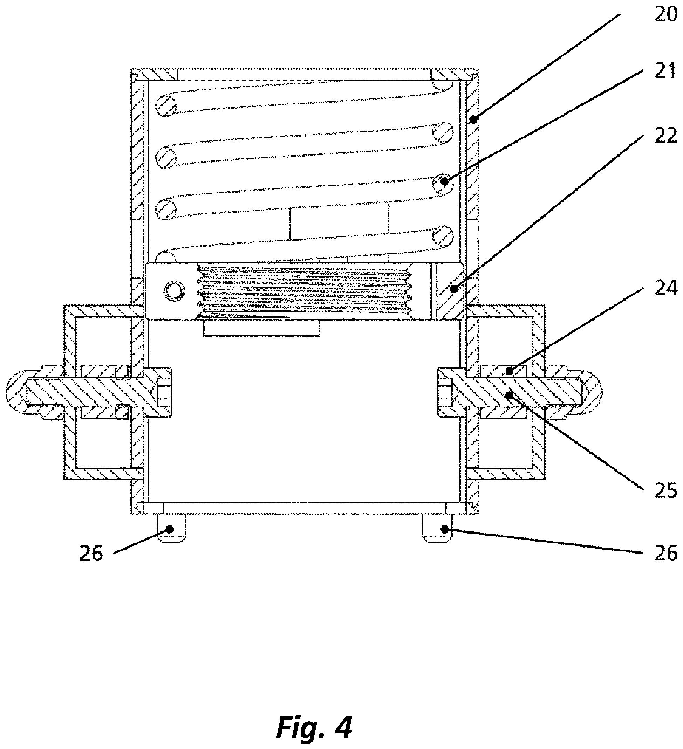

Das in Figur 4 gezeigte Haltelement 2 weist ein Gehäuse 20 auf, in dem eine Druckfeder 21 gehalten ist. Die Druckfeder 21 stützt sich an einer Seite an der Gehäuseinnenwand ab. An der gegenüberliegenden Seite greift sie an einem Stellring 22 an, der im Gehäuse 20 über eine Führung 23 so geführt ist, dass eine translatorische Bewegung des Stellrings 22 möglich ist. An dem Stellring 22 kann ein Prüfkopf 3 befestigt werden, was beispielsweise durch eine Schraubverbindung möglich ist. So kann ein Prüfkopf 3 mit dem Halteelement 2 verbunden und zusätzlich mit der Druckkraft der Druckfeder 21 gegen die jeweilige Außenwand gedrückt werden.

Am Gehäuse 20 sind zwei zylinderförmige Elemente 24 mit einem Führungsbolzen 25 befestigt, so dass sie parallel zur jeweiligen Außenwand ausgerichtet sind. Über die zylinderförmigen Elementen 24 kann das Spannband als zumindest Teil einer Spannvorrichtung 6 geführt sein, so dass mit dem Spannband als zumindest ein Teil einer Spannvorrichtung 6 aufgebrachte Zugkräfte über die zylinderförmigen Elemente 24 auf das Gehäuse 20 und einen daran befestigten Prüfkopf 3 übertragen werden können, so dass der Prüfkopf 3 mit dem Gehäuse 20 gegen die Oberfläche der jeweiligen Außenwand gedrückt wird. Das Gehäuse 20 stützt sich bei diesem Beispiel mit Magneten 26 oder Abstandshaltern an der Außenwand eines Behälters 1 oder einer Leitung ab und das Gehäuse 20 kann im Zusammenwirken mit dem Spannband als zumindest ein Teil einer Spannvorrichtung 6 dort exakt positioniert und fixiert werden.

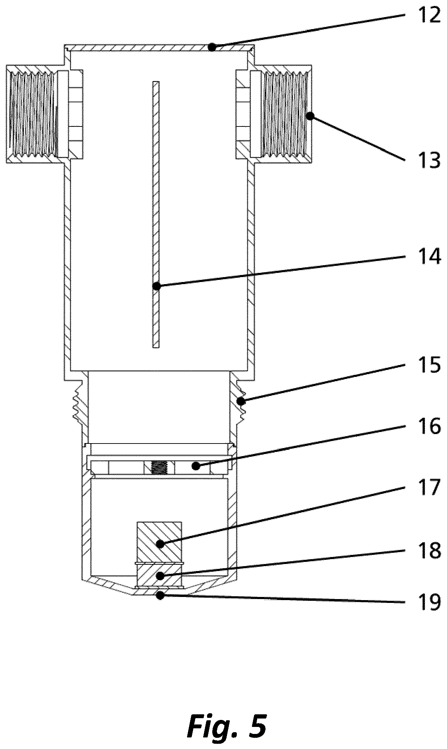

In Figur 5 ist in einer Schnittdarstellung ein Beispiel eines Prüfkopfs 3 gezeigt, der bei einem erfindungsgemäßen System eingesetzt werden kann. Der Prüfkopf 3 verfügt über ein Prüfkopfgehäuse, das im Wesentlichen hohlzylindrisch ist, und an einer Seite mit einem Deckelelement 12 verschlossen worden ist.

In einem Bereich der Außenwand des Prüfkopfgehäuses ist ein Außengewinde 15 ausgebildet, mit dem der Prüfkopf 3 in den Stellring 22 eingeschraubt werden kann.

An der dem Deckelelement 12 gegenüberliegenden Seite ist eine Koppelschicht 19 vorhanden, die aus einem Kunststoff gebildet sein kann. Mit der Koppelschicht 19 kann eine verbesserte Ein- und Auskopplung von Wellen in bzw. aus der Wandung eines Behälters 1 bzw. einer Leitung erreicht werden. Im Anschluss an die Koppelschicht 19 sind bei diesem Beispiel ein Wellen emittierendes Element 17 und ein Wellen detektierendes Element 18 angeordnet.

Im Prüfkopfgehäuse sind außerdem ein Spannring 16, eine Platine mit vorverstärker 14 sowie nicht dargestellte Leitungen, über die Steuersignale und Messsignale zu bzw. von den Elementen 17 und 18 zu der optional vorhandenen Platine mit Vorverstärker 14 übertragen werden können, vorhanden. Hohlräume im Prüfkopfgehäuse können mit einem polymeren Harz ausgefüllt sein.

Am Prüfkopfgehäuse ist außerdem ein Anschluss 13 für eine Energieversorgungs- und Datenleitung 4 vorhanden.

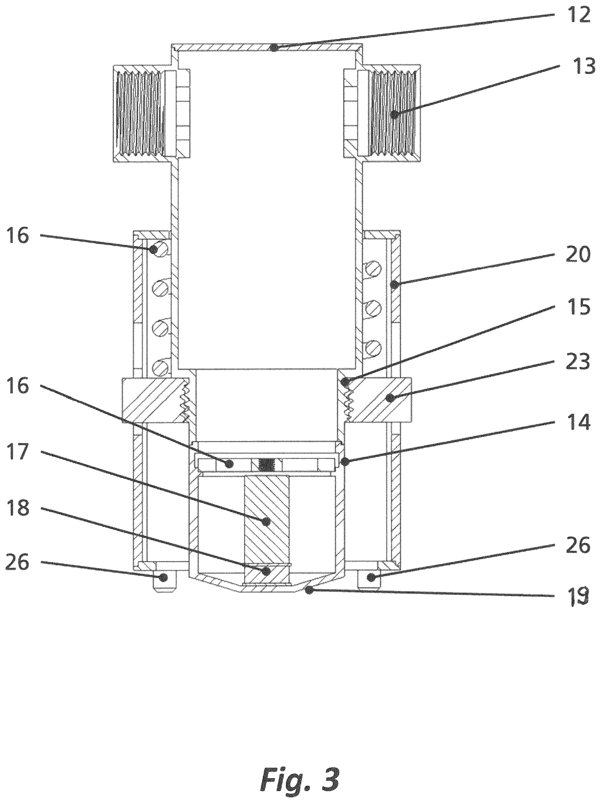

Figur 3 zeigt, wie ein Prüfkopf 3 mit einem Halteelement 2 verbunden sein kann.

## Patentansprüche

1. System zur Überwachung von Behältern oder Leitungen in denen mindestens zwei Phasen oder mindestens zwei Medien einer Phase in Form einer Flüssigkeit, eines Gases und/oder eines Feststoffs gemeinsam gelagert oder transportiert werden, wobei
das System mit mehreren entlang einer Achse in einer Reihenanordnung oder in einer Ebene um einen Behälter (1) oder eine Leitung herum mit bekannten Abständen zueinander angeordneten Prüfköpfen, (3) die an dem jeweiligen Behälter (1) oder der jeweiligen Leitung befestigbaren Prüfköpfen (3) und über eine Daten- und Energieversorgungsleitung (4) zur Übertragung von Mess- und Steuersignalen und zur Stromversorgung mit den Prüfköpfen (3) verbundenen elektronischen Auswerte- und Steuereinheit verbunden sind, gebildet ist, und dabei
die Prüfköpfe (3) jeweils mit mindestens einem elastische Wellen emittierenden Element (17) und mindestens einem elastische Wellen detektierenden Element (18) oder mindestens einem elastische Wellen emittierenden und detektierenden Element gebildet sind, wobei die elastische Wellen emittierenden Elemente (17) so angeordnet und ausgebildet sind, geführte Wellen in eine Wandung des jeweiligen Behälters (1) oder der jeweiligen Leitung einzukoppeln und die elektronische Auswerte- und Steuereinheit derart ausgebildet ist, mit Messsignalen der Wellen detektierenden Elemente (18) eine Schadens- und Rissdetektion, eine Korrosions- und Wanddickenbestimmung, eine Füllstandsmessung und/oder eine Funktionsüberprüfung der Prüfköpfe (3) durchzuführen sowie Wellen emittierende Elemente (17) anzusteuern und
die Prüfköpfe mittels Halteelementen (2) und einer Spannvorrichtung (6) am jeweiligen Behälter (1) oder der jeweiligen Leitung an einer Außenwand (5) befestigbar sind,
**dadurch gekennzeichnet, dass**
die elektronische Auswerte- und Steuereinheit ausgebildet ist, um eine elektromechanische Impedanzspektroskopie durchzuführen und zur Bestimmung einer Impedanz eine sequentielle Übertragung und Auswertung der mit den elastischen Wellen detektierenden Elementen (18) bestimmten elektrischen Spannung und des elektrischen Stroms durchzuführen.

2. System nach Anspruch 1, **dadurch gekennzeichnet, dass** die Prüfköpfe (3) im jeweiligen Halteelement (2) mit einer Druckkraft, die in Richtung der jeweiligen Außenwand wirkt, beaufschlagbar sind, so dass die elastische Wellen emittierenden Elemente (17) und elastische Wellen detektierenden Elemente (18) direkt an der Außenwand (5) oder über eine Koppelschicht (19), die an der Außenwand (5) angekoppelt sind, anliegt.

3. System nach einem der vorhergehenden Ansprüche, **dadurch gekennzeichnet, dass** in den Prüfköpfen (3) jeweils ein Vorverstärker (14) für Messsignale integriert ist.

4. System nach einem der vorhergehenden Ansprüche, **dadurch gekennzeichnet, dass** Prüfköpfe (3) in einer Reihen- und/oder Spaltenanordnung angeordnet sind.

5. System nach einem der vorhergehenden Ansprüche, **dadurch gekennzeichnet, dass** mehrere Systeme miteinander verbindbar sind.

6. System nach einem der vorhergehenden Ansprüche, **dadurch gekennzeichnet, dass** die Prüfköpfe (3) mit einem Polymer vergossen ausgeführt sind.

7. System nach einem der vorhergehenden Ansprüche, **dadurch gekennzeichnet, dass** an den Halteelementen (2) jeweils mindestens ein zylinderförmiges Element (24) befestigt ist, an dem die Spannvorrichtung (6) angreift, wobei ein Spannband über das mindestens eine zylinderförmige Element geführt ist.

8. System nach dem vorhergehenden Anspruch, **dadurch gekennzeichnet, dass** zwei zylinderförmige Elemente an zwei sich gegenüberliegenden Seiten eines Haltelements (2) angeordnet sind.

9. System nach dem vorhergehenden Anspruch, **dadurch gekennzeichnet, dass** im Gehäuse (20) des Haltelements (2) eine Druckfeder (21) gehalten ist, mit der eine zusätzliche Druckkraft den jeweiligen Prüfkopf (3) gegen eine jeweilige Außenwand drückt.

## Claims

1. A system for monitoring containers or conduits in which at least two phases or at least two media of a phase in the form of a liquid, a gas and/or a solid are jointly stored or transported, wherein
the system is formed with a plurality of test heads (3), which are arranged along an axis in a series arrangement or in a plane around a container (1) or a conduit at known distances from one another, which test heads (3) are fastenable to the respective container (1) or the respective conduit, and which test heads (3) are connected to an electronic evaluation and control unit via a data and power supply line (4) for the transmission of measurement and control signals and for power supply, and at the same time
the test heads (3) are each formed with at least one elastic wave emitting element (17) and at least one elastic wave detecting element (18) or at least one elastic wave emitting and detecting element, wherein the elastic wave emitting elements (17) are arranged and configured to couple guided waves into a wall of the respective container (1) or the respective conduit, and the electronic evaluation and control unit is configured to use measurement signals from the wave-detecting elements (18) to perform damage and crack detection, corrosion and wall thickness determination, fill level measurement and/or a functional check of the test heads (3) and to actuate wave emitting elements (17), and
the test heads are fastenable by means of holding elements (2) and a clamping device (6) to the respective container (1) or the respective conduit on an outer wall (5),
**characterized in that**
the electronic evaluation and control unit is configured to carry out an electromechanical impedance spectroscopy and, in order to determine an impedance, to carry out a sequential transmission and evaluation of the electrical voltage and the electrical current determined with the elastic wave-detecting elements (18).

2. The system according to claim 1, **characterized in that** a compressive force acting in the direction of the respective outer wall may be applied to the test heads (3) in the respective holding element (2), such that the elastic wave emitting elements (17) and elastic wave detecting elements (18) bear directly against the outer wall (5) or via a coupling layer (19) which is coupled to the outer wall (5).

3. The system according to any one of the preceding claims, **characterized in that** a pre-amplifier (14) for measurement signals is integrated in each of the test heads (3).

4. The system according to any one of the preceding claims, **characterized in that** test heads (3) are arranged in a row and/or column arrangement.

5. The system according to any one of the preceding claims, **characterized in that** a plurality of systems are connectable to one another.

6. The system according to any one of the preceding claims, **characterized in that** the test heads (3) are encapsulated with a polymer.

7. The system according to any one of the preceding claims, **characterized in that** at least one cylindrical element (24) is fastened to each of the holding elements (2) and is engaged by the clamping device (6), wherein a clamping band is guided over the at least one cylindrical element.

8. The system according to the preceding claim, **characterized in that** two cylindrical elements are arranged on two opposite sides of a holding element (2).

9. The system according to the preceding claim, **characterized in that** a compression spring (21) is held in the housing (20) of the holding element (2) and is used to apply an additional compressive force pressing the respective test head (3) against a respective outer wall.

## Revendications

1. Système de surveillance de réservoirs ou de conduites dans lesquels au moins deux phases ou au moins deux fluides d'une phase sont stocké(e)s ou transporté(e)s ensemble sous la forme d'un liquide, d'un gaz et/ou d'une substance solide, dans lequel
le système est constitué de plusieurs têtes de test (3) qui sont agencées autour d'un récipient (1) ou d'une conduite, en rangées ou dans un plan, le long d'un axe et à des intervalles connus les unes par rapport aux autres, lesdites têtes de test (3) pouvant être fixées au récipient (1) respectif ou à la conduite respective et étant reliées à l'unité d'évaluation et de commande électronique reliée aux têtes de test (3) par l'intermédiaire d'une ligne de données et d'alimentation en énergie (4) afin de transmettre des signaux de mesure et de commande et de fournir une alimentation électrique, et
les tête de test (3) sont respectivement constituées d'au moins un élément d'émission d'ondes sismiques (17) et d'au moins un élément de détection d'ondes sismiques (18) ou d'au moins un élément d'émission et de détection d'ondes sismiques, dans lequel les éléments d'émission d'ondes sismiques (17) sont agencés et conçus pour coupler des ondes guidées dans une paroi du récipient (1) respectif ou de la conduite respective et l'unité d'évaluation et de commande électronique est conçue pour mettre en œuvre une détection de dommages et de fissures, une détermination de corrosion et d'épaisseur de paroi, une mesure de niveau de remplissage et/ou une vérification de fonctionnement des têtes de test (3) grâce à des signaux de mesure des éléments de détection d'ondes (18), et pour commander des éléments d'émission d'ondes (17) et
les têtes de test peuvent être fixées au moyen d'éléments de retenue (2) et d'un dispositif de serrage (6) à une paroi extérieure (5) du récipient (1) respectif ou de la conduite respective,
**caractérisé en ce que**
l'unité d'évaluation et de commande électronique est conçue pour mettre en œuvre une spectroscopie d'impédance électromécanique et pour mettre en œuvre une transmission séquentielle et une évaluation de la tension électrique et du courant électrique déterminés grâce aux éléments de détection d'ondes sismiques (18), afin de déterminer une impédance.

2. Système selon la revendication 1, **caractérisé en ce que** les têtes de test (3) peuvent être soumises, au sein de l'élément de retenue (2) respectif, à une force de pression qui s'exerce en direction de la paroi extérieure respective, de sorte que les éléments d'émission d'ondes sismiques (17) et les éléments de détection d'ondes sismiques (18) reposent contre la paroi extérieure (5) directement ou par l'intermédiaire d'une couche de couplage (19) couplée à la paroi extérieure (5).

3. Système selon l'une quelconque des revendications précédentes, **caractérisé en ce qu'**un préamplificateur (14) destiné aux signaux de mesure est intégré dans les têtes de test (3).

4. Système selon l'une quelconque des revendications précédentes, **caractérisé en ce que** des têtes de test (3) sont agencées selon un agencement en rangées et/ou en colonnes.

5. Système selon l'une quelconque des revendications précédentes, **caractérisé en ce que** plusieurs systèmes peuvent être reliés les uns aux autres.

6. Système selon l'une quelconque des revendications précédentes, **caractérisé en ce que** les têtes de test (3) sont réalisées par moulage avec un polymère.

7. Système selon l'une quelconque des revendications précédentes, **caractérisé en ce que** respectivement au moins un élément cylindrique (24), avec lequel le dispositif de serrage (6) vient en prise, est fixé aux éléments de retenue (2), dans lequel une bande de serrage est guidée sur le au moins un élément cylindrique.

8. Système selon la revendication précédente, **caractérisé en ce que** deux éléments cylindriques sont agencés sur deux côtés opposés d'un élément de retenue (2).

9. Système selon la revendication précédente, **caractérisé en ce qu'**un ressort de compression (21), grâce auquel une force de compression supplémentaire presse la tête de test (3) respective contre une paroi extérieure respective, est retenu au sein du boîtier (20) de l'élément de retenue (2).
